# DEMANDE DE BREVET EUROPEEN

(11) **EP 1 000 552 A1**
(43) Date de publication de la demande: **17.05.2000**
(21) Numéro de dépôt: 99402800.9
(22) Date de dépôt: 10.11.1999
(51) Int. Cl.: A23K 1/16, A23K 1/18, A23L 1/30

(54) **Formulation de complément alimentaire, composition alimentaire la comprenant, ses utilisations**

(30) Priorité: 13.11.1998 FR 9814275
(71) Demandeur: COMPAGNIE CHIMIQUE D'AQUITAINE, Société Anonyme, F-33500 Libourne (FR)
(72) Inventeur: Gossart, Philippe, 33500 Lalande de Pomerol (FR)
(74) Mandataire: Keib, Gérard

(57) **Abrégé**

L'invention se rapporte à une formulation de complément alimentaire destinée à améliorer la digestibilité des rations alimentaires, notamment pour animaux, comprenant un mélange de butyrates auxquels sont ajoutés éventuellement des composés édulcorants, vitamines, agents de conservation.

L'invention concerne également une composition alimentaire renfermant une telle formulation de complément, ainsi que les utilisations d'une mélange de butyrates en vue d'améliorer la digestibilité des rations alimentaires.

## Description

L'invention se rapporte à une formulation de complément alimentaire destinée à l'alimentation.

Elle se rapporte également à une composition alimentaire comprenant une telle formulation ainsi qu'à ses utilisations.

Elle se rapporte enfin à un procédé pour améliorer la digestibilité des aliments.

Il est connu que les rations alimentaires peuvent être complétées par des apports en différents composés.

Ces apports sont généralement utilisés en mélangeant à la ration alimentaire une ou plusieurs formulations de complément sous forme liquide, de poudre, granulés, comprimés, etc.

Les produits entrant dans la composition de ces formulations de complément sont choisis en fonction du but recherché.

Par exemple, des formulations ont été élaborées pour augmenter la consommation des aliments et le poids moyen des animaux.

Ainsi, le document FR-A-2 706 738 concerne une telle formulation de complément alimentaire, comprenant un mélange binaire de butyrate de sodium et de butyrate d'éthyle, dans laquelle l'acide butyrique est stabilisé.

Il est également connu d'utiliser des formulations de complément alimentaire pour augmenter la production de lait chez les vaches laitières.

Par exemple, le document EP-A-0 233 819 divulgue une telle formulation de complément alimentaire comprenant un mélange de sel de calcium et d'acide isobutyrique et d'au moins un acide choisi parmi les acides isovalérique, valérique et 2-méthylbutyrique, et de 5 à 15 % d'un additif comprenant de l'huile de coprah et du suif.

Il est également souhaitable d'améliorer la digestibilité des rations alimentaires données aux animaux.

Une telle amélioration est bien évidemment souhaitable de façon générale mais présente également un intérêt supplémentaire dans certains cas.

Par exemple, pour les animaux de compagnie, tels que les chiens ou les chats, ayant un mode de vie citadin.

En effet, dans un tel cas, l'animal subit des facteurs externes défavorables liés à son environnement, tels que le bruit ou la circulation automobile, la pollution de l'air, etc.

En outre, l'animal citadin ne dispose généralement que de peu d'espace pour s'oxygéner et nettoyer son organisme.

Ces facteurs externes ont généralement un effet négatif sur la qualité de la digestion, aux conséquences graves pour l'animal.

Une telle digestion insuffisante ou de mauvaise qualité des rations alimentaires, peut en effet conduire à une fragilisation des villosités intestinales, pouvant provoquer des abcès, ulcères, voire des cancers de l'intestin.

L'invention vise à proposer une formulation de complément alimentaire pour animaux ou humains, utilisable comme facteur de croissance et de consommation et permettant d'améliorer la digestibilité des rations alimentaires.

Notamment en permettant une revitalisation des villosités intestinales des animaux et en augmentant les sécrétions pancréatiques et intestinales exocrines et endocrines.

A cet effet, la formulation de complément alimentaire destinée à l'alimentation humaine ou animale selon l'invention comprend un mélange de butyrate de calcium et de butyrate d'éthyle, éventuellement additionné de butyrate de sodium.

Dans la présente demande de brevet et pour la commodité du langage, on désigne par butyrate l'ensemble des formes de ce composé. En particulier, le terme 〈〈 butyrate 〉〉 tel qu'utilisé dans la présente demande de brevet englobe notamment l'isobutyrate.

Selon d'autres caractéristiques, la formulation de complément comprend entre environ 99,99 % et environ 40 % en poids, par rapport au poids total de la formulation, de butyrate de calcium et entre environ 0,01 % et environ 60 % en poids de butyrate d'éthyle, par rapport au poids total de la formulation.

Dans la variante d'exécution selon laquelle la formulation de l'invention comprend un mélange de butyrate de calcium, de butyrate de sodium et de butyrate d'éthyle, la quantité totale de butyrate de calcium et de butyrate de sodium varie entre environ 99,99 % et environ 40 % en poids, par rapport au poids total de la formulation.

Selon une forme d'exécution, la formulation de complément alimentaire comprend de plus d'autres sels de l'acide butyrique, notamment du butyrate de potassium.

Selon cette forme de réalisation, la formulation de complément comprend entre environ 99,99 % et environ 40 % en poids, par rapport au poids total de la formulation, de butyrate de calcium, de potassium, éventuellement de butyrate de sodium.

Un exemple de formulation de l'invention comprend, exprimé en pourcentage en poids par rapport au poids total de la formulation, environ 45 % de butyrate de calcium, environ 50 % de butyrate de sodium et environ 5 % de butyrate d'éthyle.

La formulation de complément de l'invention peut également comprendre un ou plusieurs composés aptes à entraîner une attirance, notamment de l'animal vers la ration alimentaire qui la renferme.

De tels composés sont par exemple les produits édulcorants, choisis notamment parmi les sucres artificiels, les saccharinates, le fructose, ainsi que les dérivés et/ou mélanges de ceux-ci.

De tels composés peuvent être présents dans la formulation de l'invention, en une quantité variant entre environ 0,01 % et environ 5 % en poids par rapport au poids total de la formulation.

Selon une autre variante d'exécution, la formulation de complément comprend un ou plusieurs composés aptes à produire du butyrate dans l'intestin.

De tels composés sont par exemple les oligosaccharides.

La formulation de complément alimentaire peut comprendre également un ou plusieurs composés additionnels, tels que vitamines en une quantité de l'ordre de quelques parties par million (p.p.m.), composés minéraux, produits anti-oxydants, agents de conservation, connus en eux-mêmes et utilisés dans l'alimentation humaine ou animale.

Il est également envisageable d'incorporer dans la formulation de complément un ou plusieurs médicaments ou produits capables de présenter une action thérapeutique ou préventive à l'égard notamment des animaux.

Il a été observé que la formulation de complément de l'invention permettait, en plus de son action sur les villosités intestinales, d'améliorer la qualité des déjections produites, qui sont généralement moins odorantes et plus petites.

La formulation de complément alimentaire de l'invention se présente généralement sous forme solide. Par exemple, elle peut se présenter sous la forme de granulés, poudre, comprimés, etc.

Lorsque la formulation de l'invention comprend des ingrédients liquides, typiquement le butyrate d'éthyle, ils peuvent être absorbés sur un support inerte conventionnel, tel que de la silice colloïdale.

Le butyrate de calcium utilisé dans la réalisation de la formulation de l'invention peut être synthétisé à partir d'un mélange équimolaire d'acide butyrique et d'un sel de calcium de l'acide phosphorique.

Le butyrate de sodium peut être synthétisé selon la méthode décrite dans le document FR-A-2 706 738.

La formulation de complément selon l'invention est appliquée à l'aliment en une quantité variant entre environ 0,01 % et environ 2 % en poids, par rapport au poids dans l'aliment.

Plus particulièrement, la formulation de l'invention peut être appliquée à l'aliment en une quantité variant entre environ 0,05 % et environ 0,5 % en poids, par rapport au poids dans l'aliment.

L'invention vise également une composition alimentaire pour animaux comprenant une formulation de complément alimentaire dont les caractéristiques sont mentionnées ci-dessus.

La composition alimentaire de l'invention comprend au moins une formulation de complément alimentaire telle que décrite dans ce qui précède, et est destinée notamment à l'alimentation des chiens, chats.

Une telle composition alimentaire comprend d'environ 99,9, % à environ 99 % en poids de céréales, sous-produits de céréales et/ou protéines animales et/ou végétales et d'environ 0,01 % à environ 2 % en poids de formulation de complément.

Plus particulièrement, la composition alimentaire comprend d'environ 99,8 % en poids à environ 99,5 % en poids de céréales, sous-produit de céréales et/ou protéines animales et/ou végétales et d'environ 0,05 % à environ 0,5 % en poids de formulation de complément.

L'invention vise également l'utilisation d'un mélange de butyrate de calcium et de butyrate d'éthyle, éventuellement additionné de butyrate de sodium, en tant que facteur de consommation et de croissance utilisable en alimentation humaine ou animale, notamment dans des rations alimentaires pour animaux.

En alimentation animale, le mélange butyrate de calcium et butyrate d'éthyle trouve plus particulièrement une utilisation dans les aliments pour chiens, chats, porcs, volaille, autruches, équidés, poissons, ruminants tels que bovins, ovins, caprins.

Le mélange butyrate de calcium et butyrate d'éthyle peut se présenter sous la forme décrite dans ce qui précède pour la formulation de complément alimentaire.

L'invention vise enfin un procédé d'amélioration de la digestibilité des aliments, comprenant l'étape consistant à ajouter à un aliment une dose efficace d'un mélange comprenant du butyrate de calcium et du butyrate d'éthyle, éventuellement additionné de butyrate de sodium.

Selon l'invention, la dose utilisée pour le mélange ci-dessus varie entre environ 0,01 % et environ 2 % en poids, par rapport au poids de l'aliment.

L'invention sera mieux comprise à la lecture de l'exemple de réalisation qui suit.

### Exemple

Une formulation de l'invention est préparée comme suit.

75 g de butyrate de calcium en poudre sont mélangés, à température ambiante, avec 25 g de butyrate d'éthyle absorbé sur de la silice colloïdale finement broyée, jusqu'à obtention d'une poudre homogène.

La poudre ainsi obtenue est incorporée, par mélange à température ambiante, dans 200 kg d'une ration alimentaire comprenant un mélange de céréales et sous-produits de céréales.

## Revendications

1. Formulation de complément alimentaire destiné à l'alimentation humaine ou animale, comprenant un mélange de butyrate de calcium et de butyrate d'éthyle, éventuellement additionné de butyrate de sodium.

2. Formulation selon la revendication 1, caractérisée en ce qu'elle comprend entre environ 99,99 % et environ 40 % en poids, par rapport au poids total de la formulation, de butyrate de calcium et entre environ 0,01 % et environ 60 % en poids de butyrate d'éthyle, par rapport au poids total de la formulation.

3. Formulation selon la revendication 1 ou 2, caractérisée en ce que la quantité de butyrate de calcium et de butyrate de sodium varie entre environ 99,99 % et environ 40 % en poids, par rapport au poids total de la formulation.

4. Formulation selon l'une quelconque des revendications 1 à 3, caractérisée en ce qu'elle comprend environ 45 % en poids de butyrate de calcium, environ 50 % en poids de butyrate de sodium et environ 5 % en poids de butyrate d'éthyle, par rapport au poids total de la formulation.

5. Formulation selon l'une quelconque des revendications 1 à 4, caractérisée en ce qu'elle comprend de plus du butyrate de potassium.

6. Formulation selon l'une quelconque des revendications 1 à 5, caractérisée en ce qu'elle comprend de plus au moins un composé apte à entraîner une attirance, notamment de l'animal, vers la ration alimentaire.

7. Formulation selon la revendication 6, caractérisée en ce que le composé est un produit édulcorant, choisi notamment parmi les sucres artificiels, les saccharinates, le fructose, ainsi que les dérivés et/ou mélanges de ces produits.

8. Formulation selon la revendication 6 ou 7, caractérisée en ce que le composé apte à entraîner une attirance, notamment de l'animal, est présent en une quantité variant entre environ 0,01 % et environ 5 % en poids, par rapport au poids total de la formulation.

9. Formulation selon l'une quelconque des revendications 1 à 8, caractérisée en ce qu'elle comprend de plus un ou plusieurs composés oligosaccharides.

10. Formulation selon l'une quelconque des revendications 1 à 9, caractérisée en ce qu'elle comprend de plus un ou des composés minéraux, vitamines, produits anti-oxydants, agents de conservation et/ou médicaments.

11. Formulation selon l'une quelconque des revendications 1 à 10, caractérisée en ce qu'elle est sous forme solide.

12. Formulation selon la revendication 11, caractérisée en ce qu'elle se présente sous la forme de granulés, poudre, comprimés.

13. Formulation selon l'une quelconque des revendications 1 à 12, caractérisée en ce que le butyrate d'éthyle est absorbé sur un support inerte, par exemple de la silice colloïdale.

14. Formulation selon l'une quelconque des revendications 1 à 13, caractérisée en ce qu'elle est appliquée à l'aliment en une quantité variant entre environ 0,01 % et environ 2 % en poids, par rapport au poids dans l'aliment.

15. Formulation selon la revendication 14, caractérisée en ce qu'elle est appliquée à l'aliment en une quantité variant entre environ 0,05 % et environ 0,5 % en poids, par rapport au poids dans l'aliment.

16. Composition alimentaire pour animaux, caractérisée en ce qu'elle comprend au moins une formulation de complément alimentaire selon l'une quelconque des revendications 1 à 15.

17. Composition selon la revendication 16, caractérisée en ce qu'elle comprend d'environ 99,9 % à environ 99 % en poids de céréales, sousproduits de céréales et/ou protéines animales et/ou végétales et d'environ 0,01 % à environ 2 % en poids de formulation de complément.

18. Composition selon la revendication 16 ou 17, caractérisée en ce qu'elle comprend d'environ 99,8 % à environ 99,5 % en poids de céréales, sous-produits de céréales et/ou protéines animales et/ou végétales et d'environ 0,05 % à environ 0,5 % en poids de formulation de complément.

19. Composition selon l'une quelconque des revendications 16 à 18, caractérisée en ce qu'elle est destinée à l'alimentation des chiens, chats.

20. Utilisation d'un mélange de butyrate de calcium et de butyrate d'éthyle, éventuellement additionné de butyrate de sodium, en tant que facteur de croissance et de consommation utilisable en alimentation humaine ou animale, notamment dans des rations alimentaires pour animaux.

21. Utilisation selon la revendication 20, pour l'alimentation des chiens, chats, porcs, volaille, autruches, poissons, équidés, ruminants, par exemple bovins, ovins, caprins.

22. Procédé d'amélioration de la digestibilité des aliments, comprenant l'étape consistant à ajouter à un aliment une dose efficace d'un mélange comprenant du butyrate de calcium et du butyrate d'éthyle, éventuellement additionné de butyrate de sodium.

23. Procédé selon la revendication 22, caractérisé en ce que la dose varie entre environ 0,01 % et environ 2 % en poids, par rapport au poids de l'aliment.
